# EUROPÄISCHE PATENTSCHRIFT

(11) **EP 1 702 833 B1**
(45) Veröffentlichungstag und Bekanntmachung des Hinweises auf die Patenterteilung: **25.06.2008**
(21) Anmeldenummer: 05026051.2
(22) Anmeldetag: 30.11.2005
(51) Int. Cl.: B62D 25/08, B62D 25/04

(54) **Aufbaustruktur für einen mit einem Fliessheck versehenen Personenkraftwagen**
Body structure for a car with a rear hatch
Structure de carrosserie pour automobile à hayon arrière

(30) Priorität: 18.03.2005 DE 102005012543
(43) Veröffentlichungstag der Anmeldung: 20.09.2006
(73) Patentinhaber: Dr. Ing. h.c. F. Porsche Aktiengesellschaft, 71287 Weissach (DE)
(72) Erfinder: Wolkersdorfer, Werner, 75242 Neuhausen (DE)

(56) Entgegenhaltungen:
- US-A- 2 896 997
- US-A- 4 408 794
- US-A- 5 102 186
- US-A- 5 123 696
- US-B1- 6 808 228
- PATENT ABSTRACTS OF JAPAN Bd. 2002, Nr. 07, 3. Juli 2002 (2002-07-03) -& JP 2002 068017 A (KANTO JIDOSHA), 8. März 2002 (2002-03-08)
- PATENT ABSTRACTS OF JAPAN Bd. 007, Nr. 157 (M-227), 9. Juli 1983 (1983-07-09) -& JP 58 063577 A (MAZDA), 15. April 1983 (1983-04-15)

## Beschreibung

Die Erfindung betrifft eine Aufbaustruktur für einen mit einem Fließheck versehenen Personenkraftwagen gemäß dem Oberbegriff des Patentanspruchs 1.

Bei einer bekannten Aufbaustruktur für einen mit einem Fließheck versehenen Personenkraftwagen sind beide seitlichen Dachrahmen (10) im Heckbereich hinter den beiden Seitentüren lediglich über die hinteren Seitenteile an die darunterliegende Aufbaustruktur angebunden.

Die US 44 08 794 A offenbart eine Aufbaustruktur für einen Personenkraftwagen, mit seitlichen Dachrahmen, hinteren Seitenteilen und hinteren Federbeinaufnahmen, wobei die gegenüberliegend angeordneten, jeweils hohlträgerartig ausgebildeten seitlichen Dachrahmen örtlich über querverlaufende Träger miteinander verbunden sind, und wobei jeder seitliche Dachrahmen im Bereich der hinteren Federbeinaufnahmen zusätzlich über eine sich in Fahrzeugquerrichtung erstreckende Hohlträgerstruktur an die angrenzende darunterliegende Federbeinaufnahme angeschlossen ist.

Aufgabe der Erfindung ist es, eine Aufbaustruktur für einen mit einem Fließheck versehenen Personenkraftwagen im Heckbereich so weiterzubilden, dass die Dacheindrückung bei einem Überschlag reduziert und darüber hinaus die Verwindungssteifigkeit des Personenkraftwagens erhöht wird.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, dass durch die zusätzliche Abstützung der beiden seitlichen Dachrahmen im Bereich der hinteren Federbeinaufnahmen über sich in Fahrzeugquerrichtung erstreckende Hohlträgerstrukturen einerseits die Dacheindrückung bei einem Fahrzeugüberschlag deutlich reduziert wird und dass darüber hinaus die Verwindungssteifigkeit des Fahrzeuges erhöht wird.

Die seitlichen Dachrahmen weisen über einen wesentlichen Teil ihrer Längserstreckung einen dreischaligen Aufbau auf, dergestalt, dass zwei übereinander liegend angeordnete im Querschnitt gesehen geschlossene Hohlträger gebildet werden. Zumindest im hinteren Bereich der Seitentüren und im daran anschließenden Bereich ist die mittige Verstärkung des seitlichen Dachrahmen in der Draufsicht gesehen, etwa L-förmig ausgebildet, so dass die Verstärkung zusammen mit dem darunterliegenden Seitenteil einen ersten obenliegenden Hohlträger einer Hohlträgerstruktur bildet, dessen kurzer Schenkel sich in Fahrzeugquerrichtung erstreckt und der mit seinem freien Ende nach außen hin in Richtung Fahrzeugaußenseite zeigt. Die L-förmige Verstärkung und das Seitenteil bilden bereichsweise quasi einen hockeyschlägerartigen Hohlträger. Unterhalb des kurzen querverlaufenden Schenkels erstreckt sich ein zweiter untenliegender Hohlträger, der durch eine schuhartige Konsole gebildet wird, die an das Seitenteil innen und eine obere Wandung der Federbeinaufnahme angeschlossen ist.

Durch die erfindungsgemäße Hohlträgerstruktur wird der seitliche Dachrahmen im Heckbereich kraftübertragend an die darunterliegende Aufbaustruktur angeschlossen, wodurch eine besonders wirkungsvolle Abstützung bei einem Fahrzeugüberschlag erzielt wird.

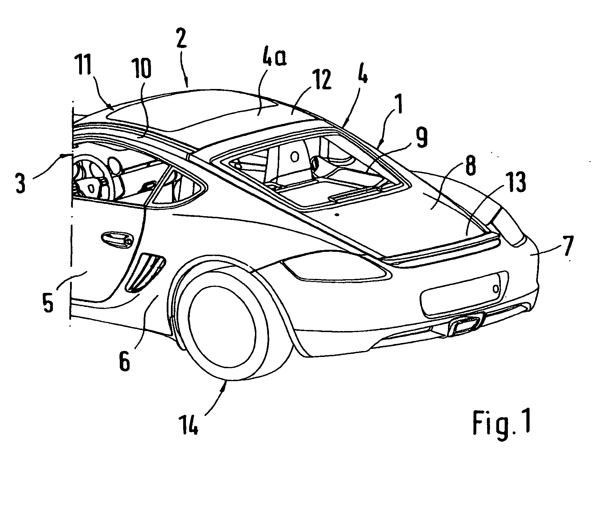

Ein Ausführungsbeispiel der Erfindung ist in den Zeichnungen dargestellt und wird im folgenden näher erläutert. Es zeigt
- Fig. 1: eine perspektivische Teilansicht von schräg hinten auf einen Personenkraftwagen,

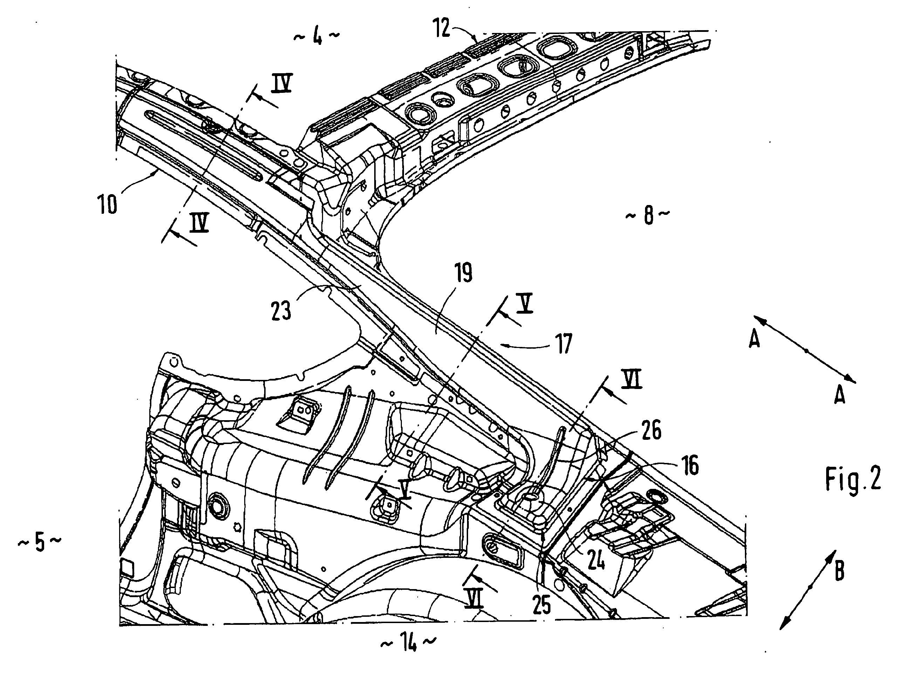

- Fig. 2: eine perspektivische Teilansicht von schräg hinten auf einen seitlichen Bereich der Aufbaustruktur ohne das Seitenteil außen,

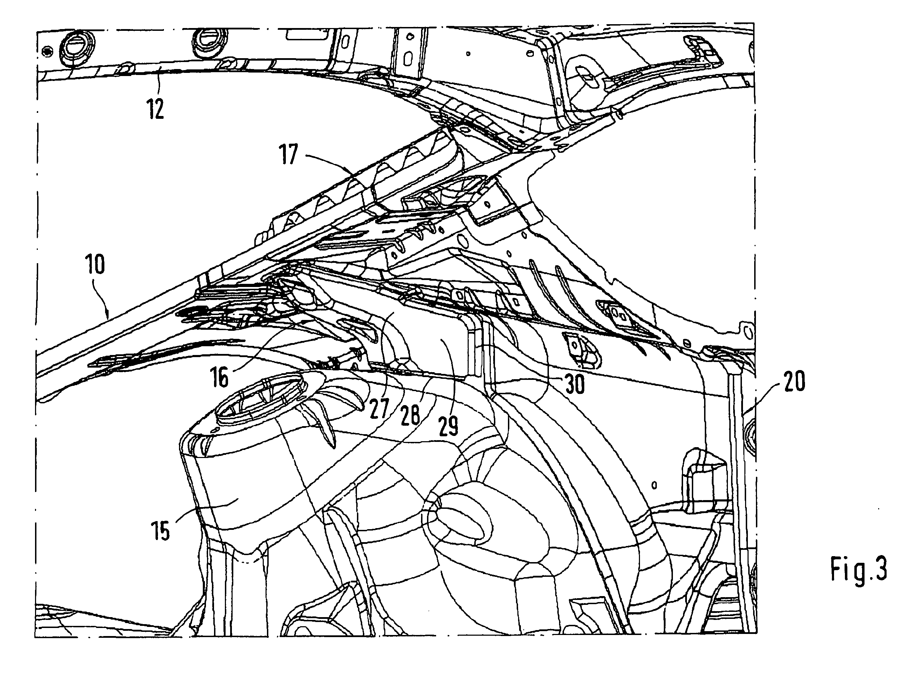

- Fig. 3: eine perspektivische Teilansicht von schräg vorne und innen auf den seitlichen Bereich der Aufbaustruktur,
- Fig. 4: einen Schnitt nach der Linie IV-IV der Fig. 2 in größerer Darstellung,
- Fig. 5: einen Schnitt nach der Linie V-V der Fig. 2 in größerer Darstellung und

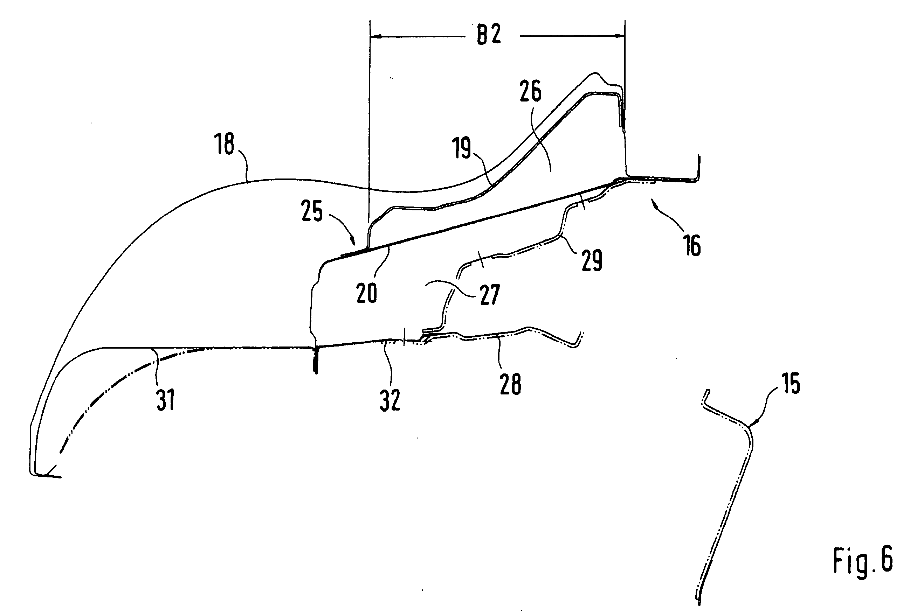

- Fig. 6: einen Schnitt nach der Linie VI-VI der Fig. 2 in größerer Darstellung.

Ein mit einem Fließheck 1 versehener Personenkraftwagen 2 weist eine Aufbaustruktur 3 auf, die im dargestellten Bereich ein Dach 4, Seitentüren 5, hintere Seitenteile 6 und ein Heckendteil 7 umfasst. Das Dach 4 setzt sich im Ausführungsbeispiel aus einem festen vorderen Dachabschnitt 4a und einer hinteren schwenkbaren Klappe 8 zusammen. Im Bereich des Dachabschnitts 4a kann ein Schiebedach oder ein herausnehmbares Dachteil vorgesehen sein. Die schwenkbare Klappe 8 umfasst eine vordere Heckscheibe 9 und einen daran anschließenden starren Klappenabschnitt. Anstelle der schwenkbaren Klappe 8 könnte auch nur eine feststehende Heckscheibe 9 vorgesehen sein.

An jeder Fahrzeuglängsseite des fließheckartigen Personenkraftwagens 2 erstreckt sich entlang des Daches 4 jeweils ein langgestreckter seitlicher Dachrahmen 10, wobei die gegenüberliegend angeordneten, jeweils hohlträgerartig ausgebildeten seitlichen Dachrahmen 10 örtlich über querverlaufende Träger 11, 12, 13 miteinander verbunden sind.

Die seitlichen Dachrahmen 10 sind im Ausführungsbeispiel über einen am vorderen Rand des Daches 4 angeordneten querverlaufenden Träger 11, einen zwischen dem hinteren Rand des Dachabschnitts 4a bzw. der angrenzenden Klappe 8 sich erstreckenden querverlaufenden Träger 12 und einen im Bereich einer hinteren Rückwand vorgesehenen querverlaufenden Träger 13 miteinander verbunden. Beide seitlichen Dachrahmen 10 erstrecken sich von einem oberen Bereich von aufrechten vorderen Scharniersäulen durchgehend bis zum hinteren querverlaufenden Träger 13.

Im Bereich von hinteren Rädern 14 sind am hinteren Seitenteil 6 der Aufbaustruktur 3 innenseitig jeweils hintere Federbeinaufnahmen 15 vorgesehen, die über einen weiteren, nicht näher dargestellten querverlaufenden Träger miteinander verbunden sein können.

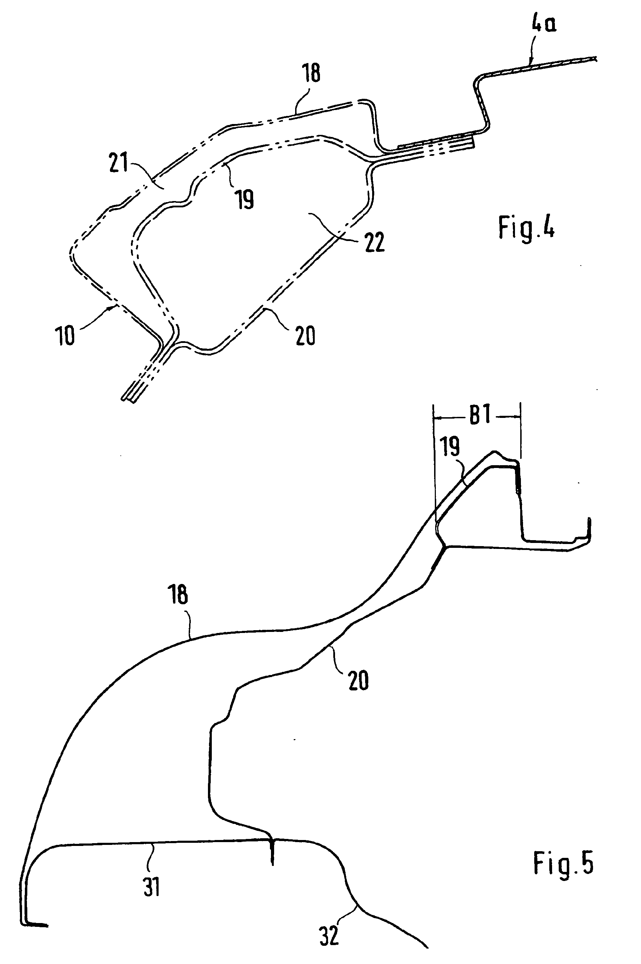

Erfindungsgemäß ist jeder seitliche Dachrahmen 10 im Bereich der hinteren Federbeinaufnahmen 15 über eine sich bereichsweise in Fahrzeugquerrichtung erstreckende Hohlträgerstruktur 16 an die angrenzende darunterliegende Federbeinaufnahme 15 kraftübertragend angeschlossen. Jeder seitliche Dachrahmen 10 wird in dem der hinteren Federbeinaufnahme 15 vorgelagerten Bereich 17 durch ein Seitenteil außen 18, eine zwischengeschaltete Verstärkung 19 und ein Seitenteil innen 20 gebildet (Fig. 4) und weist in diesem Bereich eine Breite B1 auf. Das Seitenteil außen 18 und die Verstärkung 19 einerseits und die Verstärkung 19 und das Seitenteil innen 20 andererseits bilden jeweils einen geschlossenen Hohlträger 21, 22.

Zur Bildung der Hohlträgerstruktur 16 ist die Verstärkung 19 des seitlichen Dachrahmens 10 bereichsweise in der Draufsicht gesehen L-förmig ausgebildet, wobei sich der längere Schenkel 23 der Verstärkung 19 in Fahrzeuglängsrichtung A-A entlang des seitlichen Dachrahmens 10 erstreckt. Der kürzere Schenkel 24 der L-förmigen Verstärkung 19 verläuft in Fahrzeugquerrichtung B-B und zeigt mit seinem freien Ende 25 zur Fahrzeugaußenseite hin. Der kürzere, querverlaufende Schenkel 24 der L-förmigen Verstärkung 19 und das darunterliegende Seitenteil innen 20 bilden einen ersten obenliegenden Hohlträger 26 der Hohlträgerstruktur 16. Der erste Hohlträger 26 weist eine Breite B2 auf, die wesentlich größer ist als die Breite B1.

Die Hohlträgerstruktur 16 umfasst ferner einen zweiten darunterliegenden Hohlträger 27, der durch das Seitenteil innen 20, eine obere Wandung 28 der hinteren Federbeinaufnahme 15 und eine schuhartige Konsole 29 gebildet wird. Die schuhartige Konsole 29 ist an die Unterseite des Seitenteils innen 20, an die Oberseite der hinteren Federbeinaufnahme 15 und an die Innenseite eines aufrechten Wandabschnittes 30 des Seitenteils innen 20 angeschlossen. Die schuhartige Konsole 29 weist im Bereich der Anbindung an das darüberliegende Seitenteil innen 20 eine größere Breite in Fahrzeugquerrichtung auf als im Bereich der Anbindung an die hintere Federbeinaufnahme 15. Im Bereich der Räder ist das Seitenteil außen 18 über einen Radkasten außen 31 mit dem Seitenteil innen 20 verbunden. Vom Seitenteil innen 20 erstreckt sich ferner ein Radkasten innen 32.

## Patentansprüche

1. Aufbaustruktur (3) für einen mit einem Fließheck (1) versehenen Personenkraftwagen (2), mit seitlichen Dachrahmen (10), hinteren Seitenteilen (16) und hinteren Federbeinaufnahmen (15), wobei die gegenüberliegend angeordneten, jeweils hohlträgerartig ausgebildeten seitlichen Dachrahmen (10) örtlich über querverlaufende Träger (11, 12, 13) miteinander verbunden sind, **dadurch gekennzeichnet, dass** jeder seitliche Dachrahmen (10) im Bereich der hinteren Federbeinaufnahmen (15) zusätzlich über eine sich in Fahrzeugquerrichtung (B-B) erstreckende Hohlträgerstruktur (16) an die angrenzende darunterliegende Federbeinaufnahme (15) angeschlossen ist und dass zur Bildung der Hohlträgerstruktur (16) eine mittige Verstärkung (19) des seitlichen Dachrahmens (10) bereichsweise in der Draufsicht gesehen etwa L-förmig ausgebildet ist, wobei sich der längere Schenkel (23) der Verstärkung (19) in Fahrzeuglängsrichtung (A-A) entlang des seitlichen Dachrahmens (10) erstreckt, wogegen der kürzere Schenkel (24) der L-förmigen Verstärkung (19) in Fahrzeugquerrichtung (B-B) verläuft und mit seinem freien Ende (25) zur Fahrzeugaußenseite hin gerichtet ist.

2. Aufbaustruktur nach Anspruch 1, **dadurch gekennzeichnet, dass** der seitliche Dachrahmen (10) in dem der hinteren Federbeinaufnahme (15) vorgelagerten Bereich (17) durch ein Seitenteil außen (18), die zwischengeschaltete Verstärkung (19) und ein Seitenteil innen (20) gebildet wird.

3. Aufbaustruktur nach Anspruch 2, **dadurch gekennzeichnet, dass** das Seitenteil außen (18) und die Verstärkung (19) einerseits und die Verstärkung (19) und das Seitenteil innen (20) andererseits jeweils einen geschlossenen Hohlträger (21, 22) bilden.

4. Aufbaustruktur nach einem der vorangegangenen Ansprüche, **dadurch gekennzeichnet, dass** der kürzere querverlaufende Schenkel (24) der L-förmigen Verstärkung (19) und das darunterliegende Seitenteil innen (20) einen ersten obenliegenden Hohlträger (26) der Hohlträgerstruktur (16) bilden.

5. Aufbaustruktur nach einem der vorangegangenen Ansprüche, **dadurch gekennzeichnet, dass** die Hohlträgerstruktur (16) ferner einen zweiten darunterliegenden Hohlträger (27) umfasst, der durch das Seitenteil innen (20), eine obere Wandung (28) der hinteren Federbeinaufnahme (15) und eine schuhartige Konsole (29) gebildet wird.

6. Aufbaustruktur nach Anspruch 5, **dadurch gekennzeichnet, dass** die schuhartige Konsole (29) an die Unterteile des Seitenteils innen (20), an die Oberseite der hinteren Federbeinaufnahme (15) und an die Innenseite eines aufrechten Wandabschnitts des Seitenteils innen (20) angeschlossen ist.

7. Aufbaustruktur nach Anspruch 5, **dadurch gekennzeichnet, dass** die schuhartige Konsole (29) im Bereich der Anbindung an das darüberliegende Seitenteil innen (20) eine größere Breite in Fahrzeugquerrichtung (B-B) aufweist als im Bereich der Anbindung an die darunterliegende Federbeinaufnahme (15).

## Claims

1. Body structure (3) for a car (2) provided with a fastback (1), with lateral roof frames (10), rear side parts (16) and rear suspension strut mounts (15), wherein the lateral roof frames (10), which are arranged opposite each other and are each designed in the manner of a hollow support, are connected locally to each other via supports (11, 12, 13) running transversely, **characterized in that** each lateral roof frame (10) is additionally connected in the region of the rear suspension strut mounts (15) via a hollow support structure (16), which extends in the transverse direction (B-B) of the vehicle, with the adjacent suspension strut mount (15) located therebelow, and **in that**, in order to form the hollow support structure (16), a central reinforcement (19) of the lateral roof frame (10) is of approximately L-shaped design in some regions, as seen in top view, with the longer limb (23) of the reinforcement (19) extending in the longitudinal direction (A-A) of the vehicle along the lateral roof frame (10) whereas the shorter limb (24) of the L-shaped reinforcement (19) runs in the transverse direction (B-B) of the vehicle and is directed with its free end (25) towards the outside of the vehicle.

2. Body structure according to Claim 1, **characterized in that**, in the region (17) mounted upstream of the rear suspension strut mount (15), the lateral roof frame (10) is formed by a side part on the outside (18), the reinforcement (19) connected in between, and a side part on the inside (20).

3. Body structure according to Claim 2, **characterized in that** the side part on the outside (18) and the reinforcement (19), firstly, and the reinforcement (19) and the side part on the inside (20), secondly, each form a closed hollow support (21, 22).

4. Body structure according to one of the preceding claims, **characterized in that** the shorter, transversely running limb (24) of the L-shaped reinforcement (19) and the side part, which is located therebelow, on the inside (20) form a first upper hollow support (26) of the hollow support structure (16).

5. Body structure according to one of the preceding claims, **characterized in that** the hollow support structure (16) furthermore comprises a second hollow support (27) which is located beneath it and is formed by the side part on the inside (20), an upper wall (28) of the rear suspension strut mount (15) and a shoe-like bracket (29).

6. Body structure according to Claim 5, **characterized in that** the shoe-like bracket (29) is connected to the lower parts of the side part on the inside (20), to the upper side of the rear suspension strut mount (15) and to the inside of an upright wall section of the side part on the inside (20).

7. Body structure according to Claim 5, **characterized in that**, in the region of the connection to the side part, which is located above it, on the inside (20), the shoe-like bracket (29) has a greater width in the transverse direction (B-B) of the vehicle than in the region of the connection to the suspension strut mount (15) located beneath it.

## Revendications

1. Structure de carrosserie (3) pour un véhicule automobile (2) muni d'un hayon arrière (1), comprenant des cadres de toit latéraux (10), des parties latérales arrière (16) et des logements de jambes de force arrière (15), les cadres de toit latéraux (10) disposés en face l'un de l'autre et réalisés à chaque fois sous forme de supports creux, étant connectés l'un à l'autre localement par des supports s'étendant transversalement (11, 12, 13), **caractérisée en ce que** chaque cadre de toit latéral (10) est en outre raccordé, dans la région des logements de jambes de force arrière (15), par le biais d'une structure de support creuse (16) s'étendant dans la direction transversale du véhicule (B-B), au logement de jambes de force (15) adjacent sous-jacent, et **en ce que** pour former la structure de support creuse (16), un renforcement central (19) du cadre de toit latéral (10) est réalisé en partie approximativement en forme de L en vue de dessus, la branche plus longue (23) du renforcement (19) s'étendant dans la direction longitudinale du véhicule (A-A) le long du cadre de toit latéral (10), tandis que la branche plus courte (24) du renforcement en forme de L (19) s'étend dans la direction transversale du véhicule (B-B) et est orientée avec son extrémité libre (25) vers le côté extérieur du véhicule.

2. Structure de carrosserie selon la revendication 1, **caractérisée en ce que** le cadre de toit latéral (10) est formé dans la région (17) montée avant le logement de jambes de force arrière (15), par un extérieur de partie latérale (18), le renforcement (19) intercalé et un intérieur de partie latérale (20).

3. Structure de carrosserie selon la revendication 2, **caractérisée en ce que** l'extérieur de partie latérale (18) et le renforcement (19) d'une part, et le renforcement (19) et l'intérieur de partie latérale (20) d'autre part, forment à chaque fois un support creux fermé (21, 22).

4. Structure de carrosserie selon l'une quelconque des revendications précédentes, **caractérisée en ce que** la branche plus courte s'étendant transversalement (24) du renforcement en forme de L (19) et l'intérieur de partie latérale (20) sous-jacent forment un premier support creux supérieur (26) de la structure de support creuse (16).

5. Structure de carrosserie selon l'une quelconque des revendications précédentes, **caractérisée en ce que** la structure de support creuse (16) comprend en outre un deuxième support creux sous-jacent (27), qui est formé par l'intérieur de partie latérale (20), une paroi supérieure (28) du logement de jambes de force arrière (15) et une console en forme de sabot (29).

6. Structure de carrosserie selon la revendication 5, **caractérisée en ce que** la console en forme de sabot (29) est raccordée aux parties inférieures de l'intérieur de partie latérale (20), au côté supérieur du logement de jambes de force arrière (15) et au côté intérieur d'une portion de paroi droite de l'intérieur de partie latérale (20).

7. Structure de carrosserie selon la revendication 5, **caractérisée en ce que** la console en forme de sabot (29) présente, dans la région de la connexion à l'intérieur de partie latérale (20) sus-jacent, une plus grande largeur dans la direction transversale du véhicule (B-B) que dans la région de la connexion au logement de jambes de force sous-jacent (15).
